(19) Europäisches Patentamt

European Patent Office

Office européen des brevets

(11) EP 0 893 321 A1

## (12) DEMANDE DE BREVET EUROPEEN

(43) Date de publication:
27.01.1999 Bulletin 1999/04

(51) Int Cl.$^6$: **B61F 5/24**, B60G 21/073,
B61F 5/14

(21) Numéro de dépôt: 98401797.0

(22) Date de dépôt: 16.07.1998

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **24.07.1997 FR 9709420
24.07.1997 FR 9709421**

(71) Demandeur: **GEC ALSTHOM TRANSPORT SA
75116 Paris (FR)**

(72) Inventeurs:
• **Boichot, Philippe
21800 Quetigny (FR)**
• **Bondon, Fabienne
71490 Couches (FR)**

(74) Mandataire: **Gosse, Michel et al
ALSTOM France SA
Service de Propriété Industrielle
c/o CEGELEC
5, Avenue Newton
92142 Clamart Cédex (FR)**

(54) **Dispositif de suspension oléopneumatique anti-roulis ou anti-lacet**

(57) La présente invention porte sur un dispositif de suspension destiné à l'amortissement du roulis ou du lacet. Ce dispositif comprend des premier A1 et second A1' amortisseurs lesquels comportent des vérins (114, 114') disposés par exemple entre un bogie (14) de véhicule ferroviaire et la caisse (15) du véhicule, l'une des extrémités desdits vérins (114, 114') étant solidaire dudit bogie (14) de véhicule ferroviaire et l'autre extrémité desdits vérins (114, 114') étant solidaire de ladite caisse (15) du véhicule.

FIG.1

## Description

La présente invention concerne les dispositifs de suspension oléopneumatiques. Elle s'applique en particulier à l'amortissement du roulis ou aux amortissements du lacet et longitudinal d'un véhicule routier ou ferroviaire.

Le brevet US 5 024 302 de KARNOP porte sur un amortisseur piloté susceptible de présenter une caractéristique d'amortissement contrôlable au moyen de valves commandées électriquement.

L'accumulateur a ici pour fonction la compensation de volume et d'assurer une pression sensiblement constante dans la chambre détendue selon l'un ou l'autre des clapets anti-retour.

L'amortisseur piloté décrit dans le brevet US 5 024 302 ne présente pas de fonction raideur anti-roulis ou anti-lacet.

La combinaison de deux amortisseurs n'est pas enseignée.

Le certificat d'utilité FR 2 252 228 de la société AUTOMOTIVE PRODUCTS Ltd, porte sur des améliorations concernant des suspensions pour véhicules.

Comme il résulte de ce document, le but du dispositif objet de ce document de l'art antérieur est de réaliser une suspension pour véhicules telles que, lors de modifications de la charge dynamique, résultant d'une tendance au roulis, dans les virages, et d'une tendance au tangage dû à un transfert de poids de l'avant à l'arrière lors d'accélérations et de ralentissements, ladite suspension fasse varier la quantité de liquide contenu dans des cavités de bâtis remplis de liquide, par lesquels le poids du véhicule est transmis aux roues, ceci afin de maintenir le véhicule horizontal.

Une analyse de la suspension pour véhicules décrit dans ce document FR 2 252 228 est effectuée en début de description.

Comme il résulte de cette analyse, la suspension pour véhicules décrite dans ce document FR 2 252 228 assure clairement un couple de rappel anti-roulis mais présente les inconvénients majeurs ci-après.

La raideur verticale et la raideur en roulis sont couplées du fait des sections différentielles des vérins.

En effet, la raideur verticale et la raideur en roulis sont déterminées par la pression de précharge de l'accumulateur.

Les dispositifs de restriction de flux assure une fonction d'amortissement aussi bien lorsque les chambres hautes sont comprimées que détendues.

En cas de détente très rapide, la chambre haute peut caviter.

La suspension décrite dans FR 2 252 228, appliquée mutatis mutandis à l'amortissement anti-lacet, présente des inconvénients similaires à ceux de l'amortissement anti-roulis.

Aussi un but de l'invention est-il de concevoir un dispositif de suspension secondaire unique à amortissement du roulis ou du lacet ne présentant pas les inconvénients des dispositifs connus et intégrant les fonctions suivantes:

- couple de rappel anti-roulis ou anti-lacet avec possibilité de réglage de la raideur anti-roulis ou anti-lacet sans démontage du dispositif oléopneumatique de suspension,
- amortissement vertical ou longitudinal, avec la possibilité de réglage de la viscance sans démontage du dispositif de suspension,
- amortissement du roulis ou du lacet avec la possibilité de réglage sans démontage du dispositif de suspension et avec la possibilité d'augmenter cette amortissement sans augmenter l'amortissement vertical ou longitudinal.

A cet effet, l'invention a pour objet un dispositif de suspension oléopneumatique d'un véhicule reliant une caisse à des roues de ce véhicule, ce dispositif comprenant un premier A1 et un second A1' amortisseur reliant les roues et la caisse, chaque amortisseur comportant:

un vérin muni d'un corps dans lequel coulisse un piston plein muni d'une tige, ledit piston délimitant une première chambre de détente et une seconde chambre de compression, ledit corps étant rempli d'un fluide,

un premier clapet anti-retour de compression CL1, CL1', un second clapet anti-retour de détente CL2, CL2', une première valve hydraulique de compression V2, V2' et une seconde valve hydraulique de détente V1, V1', un accumulateur oléopneumatique préchargé constitué d'une chambre, ledit clapet de compression CL1, CL1' et ladite valve de détente V1, V1' étant montés en parallèle, ledit clapet de compression CL1 et ladite valve de détente V1 étant disposés entre la chambre de détente et un point intermédiaire A, ledit clapet de compression CL1' et ladite valve de détente V1' étant disposés entre ladite chambre de détente et un point intermédiaire A', ledit clapet de détente CL2, CL2' et ladite valve de compression V2, V2' étant montés en parallèle, ledit clapet de détente CL2 et ladite valve de compression V2 étant disposés entre la chambre de compression et ledit point intermédiaire A', ledit clapet de détente CL2' et ladite valve de compression V2' étant disposés entre la chambre de compression et ledit point intermédiaire A,

caractérisé en ce qu'il comprend de plus

un clapet CL3, CL3' et une valve V3, V3' montés en parallèle, ledit clapet CL3 et ladite valve V3 étant disposés entre ledit point intermédiaire A et ladite chambre de l'accumulateur, ledit clapet CL3' et ladite valve V3' étant disposés entre ledit point intermédiaire A' et ladite chambre de l'accumulateur.

Un avantage du dispositif de suspension de l'invention est qu'il assure une fonction raideur anti-roulis ou anti-lacet.

Les accumulateurs 3, 3' préchargés de façon identiques induisent une raideur pneumatique qui se traduit via le circuit hydraulique et le bras de levier par un couple de rappel en roulis ou en lacet, idéalement linéaire de la forme:

$$Mpneum = -K_\Theta\ (P0,\ V0,\ S,\ a)\ \Theta_c,\ (\text{rappel en roulis})$$

$$Mpneum = -K_\alpha\ (P0,\ V0,\ S,\ a)\ \alpha_c,\ (\text{rappel en lacet})$$

la signification des variables étant donnée en fin de description.

L'absence de section différentielle (St=0) des vérins n'induit aucune précharge ou raideur verticale ou longitudinale pour le dispositif.

La modification de la précharge P0 des accumulateurs permet de modifier la valeur de $K_\Theta$ ou $K_\alpha$.

Un autre avantage du dispositif de suspension de l'invention est qu'il assure une fonction amortissement vertical ou longitudinal.

Les ensembles clapets et valves CL1/V1, CL2/V2 et CL1'/V1', CL2'/V2' permettent de régler la caractéristique d'amortissement vertical Famz, F'amz ou longitudinal Famx, F'amx générée par le dispositif.

Les valves peuvent être éléments passifs présentant une ouverture progressive en fonction de la différence de pression, ou un élément dont la section de passage est contrôlée par un système externe.

Lorsque la chambre 1 est comprimée, le clapet CL1 est fermé, la valve V1 permet de réguler la perte de charge de la chambre 1 vers le point A.

La chambre 2 étant détendue, le clapet CL2 est ouvert et court-circuite la valve V2, il existe donc une perte de charge minimale entre le point A' et la chambre 2.

Ce mode de fonctionnement est caractéristique du dispositif et le différencie du document FR 2 252 228.

Le fonctionnement est symétrique lorsque la chambre 2 est comprimée.

L'utilisation des clapets de décharge évite tout risque de cavitation des chambres détendues.

Le dispositif de l'invention permet d'avoir une plus grande plage de contrôle de la caractéristique d'amortissement.

Le dispositif de l'invention permet un réglage indépendant en compression et en détente, la régulation en pression s'exerce toujours au niveau de la chambre comprimée.

Les clapets évitent tout problème lié à la dynamique des valves.

Par rapport à un amortissement bitube conventionnel, le réglage des valves et des clapets s'effectue sans démontage du piston.

Un autre avantage du dispositif de suspension de l'invention est qu'il assure une fonction amortissement en roulis ou en lacets.

Les ensembles clapets et valves CL3/V3 et CL3'/V3' permettent d'introduire des pertes de charges supplémentaires PB-P3' et PA-P3 liées, selon le cas, à la vitesse angulaire de roulis pour générer un couple d'amortissement du roulis Mam$\Theta$, ou à la vitesse angulaire de lacets pour générer un couple d'amortissements du lacets Mam$\alpha$.

Cet amortissement en roulis ou lacet n'induit aucune contribution supplémentaire sur l'amortissement vertical ou longitudinal.

Cette propriété est liée à la symétrie des vérins, ce qui différencie le dispositif de l'invention du dispositif décrit dans le document FR 2 252 228.

Un avantage important du dispositif à amortissement du roulis de l'invention est de permettre une augmentation de l'amortissement en roulis sans toutefois modifier l'amortissement vertical.

Il est donc possible d'augmenter, selon le cas, l'amortissement de roulis sans modifier l'amortissement vertical, ou l'amortissement de lacet sans modifier l'amortissement longitudinal.

Un autre avantage du dispositif de suspension de l'invention est qu'il peut être piloté.

Les valves V1, V2; V1', V2' et V3, V3' peuvent être des composants passifs, par exemple des soupapes présentant une ouverture progressive en fonction de la pression différentielle.

Ces valves peuvent également être pilotées extérieurement pour contrôler la section de passage.

Les orifices des valves V1, V2 peuvent, par exemple, correspondre aux deux sections de passage d'une valve 4/2 ou à deux valves 2/2. Il en va de même pour les valves V1', V2' et V3, V3'.

Le contrôle des sections de passage des orifices des valves V1, V2 et V1', V2' permet de maîtriser, selon le cas, les efforts d'amortissement vertical Famz, F'amz ou les efforts d'amortissement longitudinal Famx, F'amx.

Le dispositif de l'invention permet donc d'assurer un contrôle semi-actif sur les modes vertical et de roulis. L'amortissement vertical et l'amortissement de roulis peuvent être complètement découplé.

Il s'agit alors d'un amortissement vertical et de roulis piloté, assurant une raideur angulaire en roulis.

Le dispositif de l'invention permet également d'assurer un contrôle semi-actif sur les modes longitudinal et de lacets. L'amortissement longitudinal et l'amortissement de lacets peuvent être complètement découplé.

Il s'agit alors d'un amortissement longitudinal et de lacets piloté, assurant une raideur angulaire en lacets.

La structure et la mise en oeuvre du dispositif selon l'invention se différencient donc des dispositifs décrits dans les documents FR 2 252 228 et US 5 024 302.

D'autres buts, caractéristiques et avantages de l'invention apparaîtront à la lecture de la description qui va suivre donnée uniquement à titre d'exemple et faite en se référant aux dessins dans lesquels :

- la figure 1 est une représentation schématique du dispositif de suspension selon l'invention appliqué à l'amortissement du roulis ;
- la figure 2 est une représentation schématique du dispositif de suspension selon l'invention appliqué aux amortissements du lacet et longitudinal.

La description ci-après porte sur une analyse de la suspension pour véhicules décrit dans le document FR 2 252 228. On se référera à la liste des variables donnée en fin de description.

Soit Pa, la pression atmosphérique, il vient en terme d'effort pour chaque vérin :

$$F = (P2-Pa)S2 - (P1-Pa)S1$$
$$= (P2-P3')S2 - (P1-P3) S1 + (P3'-Pa)S2 - (P3-Pa)S1$$

De même

$$F' = (P2'-P3)S2 - (P1'-P3')S1 + (P3-Pa)S2 - (P3'-Pa)S1$$

**I) Si l'on considère la suspension de FR 2 252 228 dans un fonctionnement anti-roulis,** alors :

$$F = Famz + Fpneum \text{ et } F' = F'amz + F'pneum$$

Avec

$$Famz = (P2-P3')S2 - (P1-P3)S1 \quad Fpneum = (P3'-Pa)S2 - (P3-Pa)S1$$

$$F'amz = (P2'-P3)S2 - (P1'-P3')S1$$

$$F'pneum = (P3-Pa)S2 - (P3'-Pa)S1$$

F et F' comprenant :

- un terme d'amortissement (Famz, F'amz) lié aux pertes de charge dans le circuit. Ces pertes de charge sont elles-mêmes reliées au débit dans les restrictions qui sont fonction de la vitesse de sollicitation des vérins, ce qui justifie le terme d'effort d'amortissement.
- un terme de raideur pneumatique (Fpneum, F'pneum) lié à la variation des pressions (P3'-P3) des accumulateurs. La pression des accumulateurs est fonction du volume de gaz interne des accumulateurs. En traduisant la conservation du volume de fluide du circuit hydraulique, sous l'hypothèse d'incompressibilité de l'huile devant le gaz, on montre que cette variation de volume est liée au déplacement des pistons. Les efforts Fpneum et F'pneum sont donc fonction du déplacement du piston ce qui justifie le terme de raideur pneumatique.

En notant

$$St = S2 - S1$$

$$S = (S2 + S1)/2$$

Il vient pour la caisse, en terme de résultante verticale (R) et moment en roulis en O ($M_o$)

$$R = F + F' = (Famz + F'amz) + [(P3-Pa) + (P3'-Pa)] St$$

$$Mo = (F'-F)a = (F'amz - Famz)a + 2Sa (P3-P3')$$

On obtient des termes d'amortissement :

$$Ram = (Famz+ F'amz)$$

$$M_oam = (F'amz-Famz)a$$

Un terme de raideur verticale avec une précharge

$$Rpneum = [(P3-PA) + (P3'-Pa)]St$$

$$Rpneum \approx 2(P0-Pa)St - Kz(P0,V0,St)zc$$

La raideur Kz est fonction de la précharge et du volume et de la section différentielle des vérins
Un couple de rappel en roulis Mpneum = 2Sa(P3-P3')

$$Mpneum \approx -K_\theta(P0,V0,S,a)\theta c$$

La raideur angulaire $K_\theta$ est fonction de la précharge et du volume des accumulateurs (P0,V0), de la somme des sections de poussée (S) et du bras de levier (a). En cas de déplacement simultané des vérins, le volume de gaz des accumulateurs reste identique donc les pressions des accumulateurs restent identiques, il n'y a pas de couple de rappel. Par contre, lorsque les pistons se déplace en sens inverse (roulis), il y a réduction du volume de gaz dans un accumulateur et augmentation dans l'autre, on crée donc une différence de pression entre les accumulateurs ce qui se traduit par un couple de rappel.

Ce système assure donc clairement un couple de rappel anti-roulis cependant :

- L'accumulateur est présenté comme un élément d'élasticité pour supporter la caisse (cette fonction est réelle du fait de la dissymétrie des sections de poussées des vérins).
- L'utilisation de l'accumulateur en tant que raideur angulaire en roulis est suggérée dans le texte général mais n'est pas revendiquée.
- L'accent est porté sur les effets d'amortissement en roulis et vertical.
- Les sections différentielles des vérins couplent la raideur verticale et la raideur angulaire en roulis, en effet, ces deux raideurs sont déterminés par la pression de précharge de l'accumulateur. C'est un inconvénient du système.

**II) Si l'on considère la suspension de FR 2 252 228 dans un fonctionnement anti-lacet,** alors :

$$F = Famx + Fpneum \text{ et } F' = F'amx + F'pneum$$

Avec

$$Famx = (P2-P3')S2 - (P1-P3)S1 \quad Fpneum = (P3'-Pa)S2 - (P3-Pa)S1$$

$$F'amx = (P2'-P3)S2 - (P1'-P3')S1$$

$$F'pneum = (P3-Pa)S2 - (P3'-Pa)S1$$

F et F' comprenant :

- un terme d'amortissement (Famx, F'amx) lié aux pertes de charge dans le circuit. Ces pertes de charge sont elles-mêmes reliées au débit dans les restrictions qui sont fonction de la vitesse de sollicitation des vérins, ce qui justifie le terme d'effort d'amortissement.
- un terme de raideur pneumatique (Fpneum, F'pneum) lié à la variation des pressions (P3'-P3) des accumulateurs. La pression des accumulateurs est fonction du volume de gaz interne des accumulateurs. En traduisant la conservation du volume de fluide du circuit hydraulique, sous l'hypothèse d'incompressibilité de l'huile devant le gaz, on montre que cette variation de volume est liée au déplacement des pistons. Les efforts Fpneum et F'pneum sont donc fonction du déplacement du piston ce qui justifie le terme de raideur pneumatique.

En notant

$$St = S2 - S1$$

$$S = (S2 + S1)/2$$

Il vient pour la caisse, en terme de résultante longitudinale (R) et moment en lacets en O ($M_o$)

$$R = F + F' = (Famx + F'amx) + [(P3-Pa) + (P3'-Pa)] St$$

$$Mo = (F'-F)a = (F'amx - Famx)a + 2Sa (P3-P3')$$

On obtient des termes d'amortissement :

$$Ram = (Famx+ F'amx)$$

$$M_oam = (F'amx-Famx)a$$

Un terme de raideur longitudinale avec une précharge

$$Rpneum = [(P3-PA) + (P3'-Pa)]St$$

$$Rpneum \approx 2(P0-Pa)St - Kx(P0,V0,St)xc$$

La raideur Kx est fonction de la précharge et du volume et de la section différentielle des vérins
Un couple de rappel en lacets $Mpneum = 2Sa(P3-P3')$

$$Mpneum \approx -K_\alpha(P0,V0,S,a) \, \alpha c$$

La raideur angulaire $K_\alpha$ est fonction de la précharge et du volume des accumulateurs (P0,V0), de la somme des sections de poussée (S) et du bras de levier (a). En cas de déplacement simultané des vérins, le volume de gaz des accumulateurs reste identique donc les pressions des accumulateurs restent identiques, il n'y a pas de couple de rappel. Par contre, lorsque les pistons se déplace en sens inverse (lacets), il y a réduction du volume de gaz dans un accumulateur et augmentation dans l'autre, on crée donc une différence de pression entre les accumulateurs ce qui se traduit par un couple de rappel.

Ce système assure donc clairement un couple de rappel anti-lacet cependant :

- L'accumulateur est présente comme un élément d'élasticité pour supporter la caisse (cette fonction est réelle du fait de la dissymétrie des sections de poussées des vérins).
- L'utilisation de l'accumulateur en tant que raideur angulaire en lacets est suggérée dans le texte général mais n'est pas revendiquée.
- L'accent est porté sur les effets d'amortissement en lacets et longitudinal.
- Les sections différentielles des vérins couplent la raideur longitudinale et la raideur angulaire en lacets, en effet, ces deux raideurs sont déterminés par la pression de précharge de l'accumulateur. C'est un inconvénient du système.

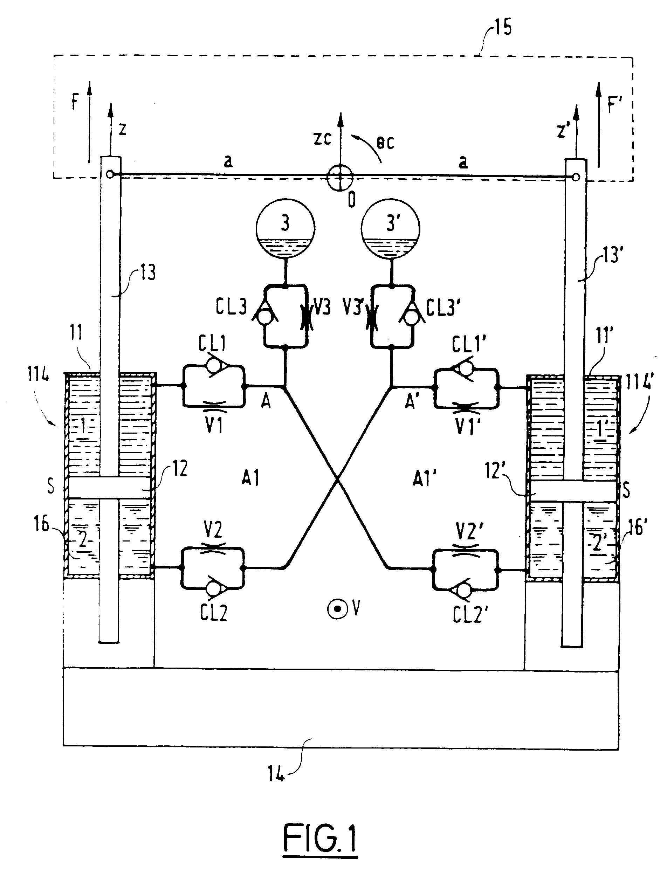

**La figure 1** représente un schéma de principe du dispositif à amortissement du roulis conforme à l'invention.

Le dispositif à amortissement du roulis comprend un premier A1 et un second A1' amortisseur.

Chaque amortisseur comporte un corps 11, 11' dans lequel coulisse un piston 12, 12' plein muni d'une tige 13, 13' l'ensemble constituant un vérin 114, 114'.

La tige 13, 13' traverse le piston 12, 12' de part en part.

Le piston 12, 12' délimite une première chambre 1, 1' dite chambre de compression et une seconde chambre 2, 2' dite chambre de détente.

Le corps 12, 12' est rempli d'un fluide 16, 16', par exemple d'huile hydraulique.

L'amortisseur comprend également un premier clapet anti-retour CL1, CL1' dit clapet de compression et un second clapet anti-retour CL2, CL2' dit clapet de détente.

Une première valve hydraulique V2, V2' dite valve de compression et une seconde valve hydraulique V1, V1' dite valve de détente peuvent être pilotées électriquement.

L'amortisseur semi-actif comprend également un accumulateur 3, 3' oléopneumatique préchargé constitué d'une chambre.

Un tel accumulateur 3, 3' oléopneumatique forme un volume fixe comprenant un gaz inerte sous pression et de l'huile hydraulique à laquelle le gaz communique sa pression.

Les deux fluides sont généralement séparés physiquement par une membrane ou une vessies.

La fonction de cet accumulateur consiste, d'une part, à absorber le volume d'huile correspondant au volume de la tige lorsque l'amortisseur est complètement comprimé et, d'autre part, à assurer une pression minimale dans le circuit hydraulique.

Le clapet de compression CL1, CL1' et la valve de détente V1, V1' sont montés en parallèle.

Le clapet de compression CL1 et la valve de détente V1 sont disposés entre la chambre de détente 1 et un point intermédiaire A.

Le clapet de compression CL1' et la valve de détente V1' sont disposés entre la chambre de détente 1' et un point intermédiaire A'.

Le clapet de détente CL2, CL2' et la valve de compression V2, V2' sont montés en parallèle.

Le clapet de détente CL2 et la valve de compression V2 sont disposés entre la chambre de compression 2 et le point intermédiaire A'.

Le clapet de détente CL2' et la valve de compression V2' sont disposés entre la chambre de compression 2' et le point intermédiaire A.

Un clapet CL3, CL3' et une valve V3, V3' sont montés en parallèle.

Le clapet CL3 et la valve V3 sont disposés entre le point intermédiaire A et la chambre de l'accumulateur 3.

Le clapet CL3' et la valve V3' sont disposés entre le point intermédiaire A' et la chambre de l'accumulateur 3'.

L'orientation des clapets est telle que représentée à la figure 1.

Les vérins 114, 114' sont disposés verticalement dans un plan transversal, de plus, dans le cas d'une application ferroviaire, entre un bogie 14 de véhicule ferroviaire et la caisse 15 du véhicule.

L'une des extrémités des vérins 114, 114' est solidaire du bogie 14 de véhicule ferroviaire et l'autre extrémité des vérins 114, 114' est solidaire de la caisse 15 du véhicule.

La description ci-après porte sur une analyse du dispositif à amortissement du roulis conforme à l'invention laquelle reprend l'analyse du document FR 2 252 228 dans le cas particulier où $S_t = 0$, $S_1 = S_2 = S$.

On introduit les pressions aux points intermédiaires A et A'.

Après calcul, il vient :

$$F = [(P2\text{-}PB)\text{-}(P1\text{-}PA)]S + [(PB\text{-}P3')\text{-}(PA\text{-}P3)]S + (P3'\text{-}P3)S$$

$$F' = [(P2'\text{-}PA)\text{-}(P1'\text{-}PB)]S + [(PA\text{-}P3) + (PB\text{-}P3')]S + (P3\text{-}P3')S$$

On note :

$$Famz = [(P2\text{-}PB)\text{-}(P1\text{-}PA)]S$$

$$F'amz = [(P2'\text{-}PA)\text{-}(P1'\text{-}PB)]S$$

$$Fam\theta = [(PA\text{-}P3)\text{-}(PB\text{-}P3')]S$$

Alors

$$R = F + F' = Famz + F'amz$$

$$Mo = (F'\text{-}F)a = (F'amz\text{-}F'amz)a + 2Fam\theta a + 2(P3\text{-}P3')Sa$$

On obtient :

- Un couple de rappel en roulis

$$Mpneum = 2\ (P3\text{-}P3')Sa$$

$$Mpneum \approx K\theta(P0,V0,S,a)\theta c$$

La raideur angulaire $K\theta$ est fonction de la précharge et du volume des accumulateurs (P0,V0), de la somme des sections de poussée (S) et du bras de levier (a). En cas de déplacement simultané des vérins, le volume de gaz des accumulateurs reste identique, les pressions des accumulateurs restent identiques, il n'y a pas de couple de rappel. Par contre lorsque les pistons se déplace en sens inverse (roulis), il y a réduction du volume de gaz dans un accumulateur et augmentation dans l'autre, on crée donc une différence de pression entre les accumulateurs ce qui se traduit par un couple de rappel.
- Un effort d'amortissement vertical

$$Ram = Famz + F'amz$$

Famz et F'amz induisent également un couple d'amortissement $Mam = (F'amz\text{-}Famz)a$
Comme le montre les expressions de Famz et F'amz en fonction des pertes de charges. Ces efforts sont déterminés par les ensembles clapet/valve (CL1/V1, CL2/V2, CL1'/V1', CL2'/V2')
- Un couple d'amortissement en roulis

$$Mam\theta = 2\ Fam\theta a = 2\ [(PA\text{-}P3) \text{-} (PB\text{-}P3')]Sa$$

Ce couple est sans effet sur l'amortissement vertical. Il est déterminé par les pertes de charge (PA-P3) et (PB-P3') donc par les ensembles clapet/valve (CL3/V3, CL3'/V3').
PA-P3 est lié au débit de fluide $Q_{A3}$ de A vers la chambre de l'accumulateur 3. En traduisant la conservation de débit, il vient :

$$Q_{A3} = Sz-Sz' \approx S(zc-a\theta c)-S(zc+a\theta c) = -2S \ a \ \theta c.$$

Donc PA-P3 est lié à $\theta c$, de même PB-P3' est lié à $Q_{B3}$, = 2S $\theta c$ et donc à $\theta c$ ce qui justifie l'interprétation d'amortissement en roulis.

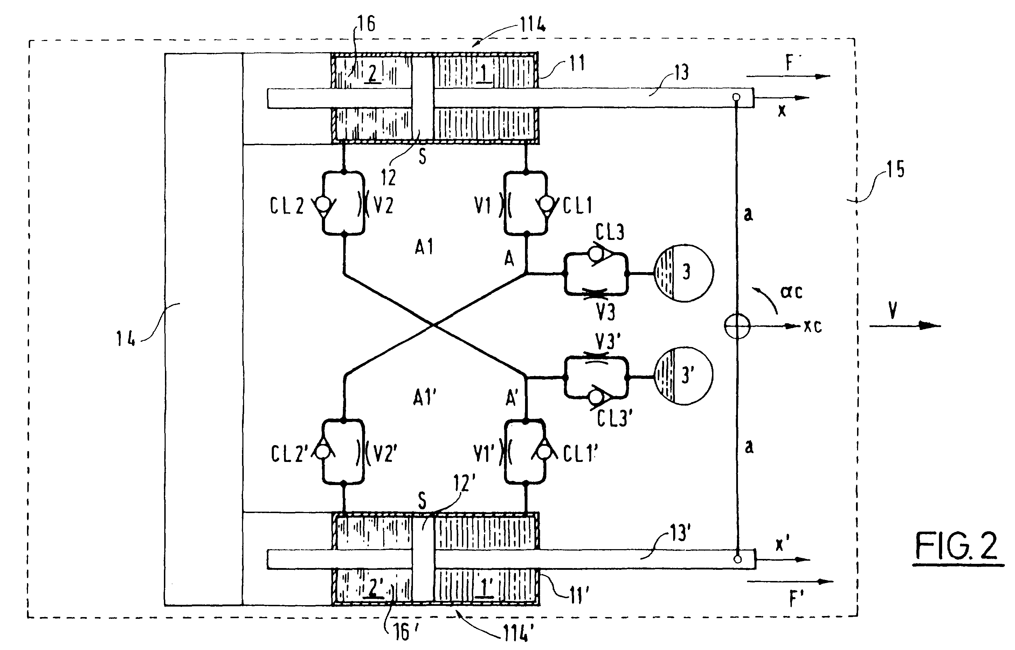

**La figure 2** représente un schéma de principe du dispositif à amortissements du lacet et longitudinal conforme à l'invention.

Sur cette figure 2, les éléments analogues à ceux de la figure 1 sont désignés par des références identiques.

Dans le cas de ce dispositif anti-lacet, les vérins 114, 114' sont disposés longitudinalement, de préférence dans un même plan, de plus, dans le cas d'une application ferroviaire, entre un bogie 14 de véhicule ferroviaire et la caisse 15 du véhicule.

La description ci-après porte sur une analyse du dispositif oléopneumatique à amortissements du lacet et longitudinal conforme à l'invention laquelle reprend l'analyse du document FR 2 252 228 dans le cas particulier où St = 0, S1 = S2 = S.

On introduit les pressions aux points intermédiaires A et A'.

Après calcul, il vient :

$$F = [(P2-PB)-(P1-PA)]S + [(PB-P3')-(PA-P3)]S + (P3'-P3)S$$

$$F' = [(P2'-PA)-(P1'-PB)]S + [(PA-P3) + (PB-P3')]S + (P3-P3')S$$

On note :

$$Famx = [(P2-PB)-(P1-PA)]S$$

$$F'amx = [(P2'-PA)-(P1'-PB)]S$$

$$Fam\alpha = [(PA-P3)-(PB-P3')]S$$

Alors

$$R = F + F' = Famx + F'amx$$

$$Mo = (F'-F)a = (F'amx-F'amx)a + 2Fam\alpha a + 2(P3-P3')Sa$$

On obtient :

- Un couple de rappel en lacets

$$Mpneum = 2 \ (P3-P3')Sa$$

$$Mpneum \approx K_\alpha(P0,V0,S,a) \ \alpha c$$

La raideur angulaire $K_\alpha$ est fonction de la précharge et du volume des accumulateurs (P0,V0), de la somme des sections de poussée (S) et du bras de levier (a). En cas de déplacement simultané des vérins, le volume de gaz des accumulateurs reste identique, les pressions des accumulateurs restent identiques, il n'y a pas de couple de rappel. Par contre lorsque les pistons se déplace en sens inverse (lacet), il y a réduction du volume de gaz dans un accumulateur et augmentation dans l'autre, on crée donc une différence de pression entre les accumulateurs ce qui se traduit par un couple de rappel.

- Un effort d'amortissement longitudinal

$$Ram = Famx + F'amx$$

Famx et F'amx induisent également un couple d'amortissement Mam = (F'amx-Famx)a

Comme le montre les expressions de Famx et F'amx en fonction des pertes de charges. Ces efforts sont déterminés par les ensembles clapet/valve (CL1/V1, CL2/V2, CL1'/V1', CL2'/V2')

- Un couple d'amortissement en lacet

$$Mam\alpha = 2\ Fam\alpha a = 2\ [(PA-P3) - (PB-P3')]Sa$$

Ce couple est sans effet sur l'amortissement longitudinal. Il est déterminé par les pertes de charge (PA-P3) et (PB-P3') donc par les ensembles clapet/valve (CL3/V3, CL3'/V3').

PA-P3 est lié au débit de fluide $Q_{A3}$ de A vers la chambre de l'accumulateur 3. En traduisant la conservation de débit, il vient :

$$Q_{A3} = Sx-Sx' \approx S(xc-a\alpha c)-S(xc+a\alpha c) = -2S\ a\ \alpha c.$$

Donc PA-P3 est lié à $\alpha c$, de même PB-P3' est lié à $Q_{B3}$, = 2S $\alpha c$ et donc à $\alpha c$ ce qui justifie l'interprétation d'amortissement en lacet.

**Liste des variables utilisées :**

| | |
|---|---|
| F,F' | effort vérin sur caisse (N), |
| a | 1/2 distance entre les points d'attache caisse des vérins (bras de levier) (m), |
| z,z' | déplacement verticale caisse/bogie au point d'attache vérin (m), |
| zc | déplacement vertical caisse au point O de la caisse, bogie fixe (m), |
| θc | roulis caisse/bogie (rad), |
| y | déplacement transversal de la caisse au centre de gravité (m), |
| α | lacet caisse (rad), |
| x,x' | déplacement longitudinal caisse/bogie au point d'attache vérin (m), |
| xc | déplacement longitudinal caisse au point O de la caisse, bogie fixe (m), |
| αc | lacet caisse/bogie (rad), |
| S1 | section du vérin côté tige (vérin dissymétrique) (m2), |
| S2 | section vérin côté fond (vérin dissymétrique) (m2), |
| St | différence de section de poussée du vérin (m2), |

- St = S2 - S1 section de tige si le vérin est dissymétrique (m2),
- St = 0 si le vérin est symétrique,

| | |
|---|---|
| S | section vérin (vérin symétrique) (m2), |
| | S = (S1 + S2)/2 si le vérin est dissymétrique |
| V1, V2, V3, V3', V1', V2' | dispositif de régulation de perte de charge, à ouverture progressive en fonction de la pression (système passif), à ouverture pilotée extérieurement (système pilote électriquement par exemple, (V1, V2) ou (V3, V3') ou (V1', V2') peuvent correspondre aux deux orifices d'une même valve, |
| CL1, CL2, CL3, CL4 | clapets anti-retour, |
| vO, PO | pression et volume initiale des accumulateurs 3 et 3' (suspension au repos), |
| V | vitesse du véhicule (sens d'avancement) (m/s). |

**Revendications**

1. Dispositif de suspension oléopneumatique d'un véhicule reliant une caisse à des roues de ce véhicule, ce dispositif comprenant un premier A1 et un second A1' amortisseur reliant les roues et la caisse, chaque amortisseur comportant:

un vérin (114,114') muni d'un corps (11, 11') dans lequel coulisse un piston (12, 12') plein muni d'une tige (13, 13'), ledit piston (12, 12') délimitant une première chambre de détente (1, 1') et une seconde chambre de compression (2, 2'), ledit corps (12, 12') étant rempli d'un fluide (16, 16'), un premier clapet anti-retour de compression CL1, CL1', un second clapet anti-retour de détente CL2, CL2', une première valve hydraulique de compression V2, V2' et une seconde valve hydraulique de détente V1, V1', un accumulateur (3, 3') oléopneumatique préchargé constitué d'une chambre, ledit clapet de compression CL1, CL1' et ladite valve de détente V1, V1' étant montés en parallèle, ledit clapet de compression CL1 et ladite valve de détente V1 étant disposés entre la chambre de détente (1) et un point intermédiaire A, ledit clapet de compression CL1' et ladite valve de détente V1' étant disposés entre ladite chambre de détente (1') et un point intermédiaire A', ledit clapet de détente CL2, CL2' et ladite valve de compression V2, V2' étant montés en parallèle, ledit clapet de détente CL2 et ladite valve de compression V2 étant disposés entre la chambre de compression (2) et ledit point intermédiaire A', ledit clapet de détente CL2' et ladite valve de compression V2' étant disposés entre la chambre de compression (2') et ledit point intermédiaire A,

caractérisé en ce qu'il comprend de plus un clapet CL3, CL3' et une valve V3, V3' montés en parallèle, ledit clapet CL3 et ladite valve V3 étant disposés entre ledit point intermédiaire A et ladite chambre de l'accumulateur (3), ledit clapet CL3' et ladite valve V3' étant disposés entre ledit point intermédiaire A' et ladite chambre de l'accumulateur (3').

2. Dispositif selon la revendication 1, caractérisé en ce que la tige (13,13') de chaque vérin (114,114') traverse le piston (12,12') de part en part, chaque vérin étant symétrique c'est-à-dire présentant une différence de section de poussée (St) de part et d'autre du piston qui est nulle.

3. Dispositif selon la revendication 1 ou 2, dans lequel l'une au moins desdites valves hydrauliques V1, V1', V2, V2', V3, V3' sont pilotées électriquement.

4. Dispositif selon l'une quelconque des revendications 1 à 3, caractérisé en ce que les vérins (114,114') sont disposés longitudinalement entre la caisse et les roues, de manière à permettre les amortissements du lacet et longitudinal du véhicule.

5. Dispositif selon l'une quelconque des revendications 1 à 3, caractérisé en ce que les vérins (114,114') sont disposés verticalement dans un plan transversal au véhicule, entre la caisse et les roues, de manière à permettre l'amortissement du roulis du véhicule.

6. Véhicule ferroviaire, caractérisé en ce qu'il comporte un dispositif de suspension selon l'une quelconque des revendications 1 à 5.

7. Train caractérisé en ce qu'il comprend au moins un véhicule ferroviaire selon la revendication 6.

8. Véhicule routier caractérisé en ce qu'il comporte un dispositif de suspension selon l'une quelconque des revendications 1 à 5.

9. Véhicule ferroviaire selon les revendications 4 et 6 prises ensemble, caractérisé en ce que lesdits vérins (114,114') sont disposés longitudinalement entre un bogie (14) du véhicule ferroviaire et la caisse (15) de ce véhicule, l'une des extrémités desdits vérins (114,114') étant reliée audit bogie (14) de véhicule ferroviaire et l'autre extrémité desdits vérins (114,114') étant reliée à ladite caisse (15) du véhicule.

10. Véhicule ferroviaire selon les revendications 5 et 6 prises ensemble, caractérisé en ce que lesdits vérins (114,114') sont disposés verticalement dans un plan transversal, entre un bogie (14) du véhicule ferroviaire et la caisse (15) de ce véhicule, l'une des extrémités desdits vérins (114,114') étant reliée audit bogie (14) de véhicule ferroviaire et l'autre extrémité desdits vérins (114,114') étant reliée à ladite caisse (15) du véhicule.

## FIG.1

FIG.2

EP 0 893 321 A1

Office européen
des brevets

**RAPPORT DE RECHERCHE EUROPEENNE**

Numéro de la demande

EP 98 40 1797

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR 2 211 360 A (COUILLANDEAU GERARD) 19 juillet 1974 * page 2, ligne 9 - page 4, ligne 35; figure 1 * | 1,6-8 | B61F5/24 B60G21/073 B61F5/14 |
| A | FR 1 535 473 A (D.B.A. ET DE DIETRICH & CIE) * page 2, colonne de gauche, ligne 53 - page 3, colonne de gauche, ligne 7; figures 1-4 * | 1,6-8 | |
| A | EP 0 691 226 A (GEC ALSTHOM TRANSPORT SA) 10 janvier 1996 * page 3, ligne 34 - ligne 56; figure 1 * | 1 | |
| A | DE 42 37 708 C (DAIMLER BENZ AG) 27 janvier 1994 * colonne 4, ligne 24 - colonne 5, ligne 60; figure 4 * | 1 | |
| A | EP 0 536 707 A (ZAHNRADFABRIK FRIEDRICHSHAFEN) 14 avril 1993 * colonne 4, ligne 21 - colonne 6, ligne 7; figure 1 * | 1 | DOMAINES TECHNIQUES RECHERCHES (Int.Cl.6) B61F B60G |
| A | EP 0 747 277 A (HANSEN INC) 11 décembre 1996 * colonne 3, ligne 43 - colonne 4, ligne 54; figure 1 * | 1 | |

Le présent rapport a été établi pour toutes les revendications

| Lieu de la recherche | Date d'achèvement de la recherche | Examinateur |
|---|---|---|
| LA HAYE | 29 octobre 1998 | Chlosta, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)